(19) Europäisches Patentamt
European Patent Office
Office européen des brevets

(11) **EP 2 874 097 A2**

(12) **EUROPEAN PATENT APPLICATION**

(43) Date of publication:
**20.05.2015 Bulletin 2015/21**

(51) Int Cl.:
***G06K 9/00*** *(2006.01)*

(21) Application number: **14191033.1**

(22) Date of filing: **30.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.11.2013 GB 201320361**

(71) Applicant: **Nokia Corporation 02610 Espoo (FI)**

(72) Inventors:
• **Fan, Lixin**
**33720 Tampere (FI)**
• **Hajiani, M. Pouria**
**33720 Tampere (FI)**

(74) Representative: **Nokia Corporation Intellectual Property Department Karakaari 7 02610 Espoo (FI)**

(54) **Automatic scene parsing**

(57)    A method comprising: obtaining an image about an at least one object of interest and a three-dimensional (3D) point cloud about said object of interest; aligning the 3D point cloud with the image; segmenting the image into a plurality of superpixels preserving a graph structure and spatial neighbourhood of pixel data of the image; associating the superpixels in the image with a subset of said 3D points, said subset of 3D points representing a planar patch in said object of interest; extracting a plurality of 3D features for each patch; and assigning at least one vector representing at least one 3D feature with a semantic label on the basis of at least one extracted 3D feature of the patch.

Obtain an image and a 3D point cloud about an object of interest (200)

Align the 3D point cloud with the image (202)

Segment the image into a plurality of superpixels (204)

Associate the superpixels in the image with a subset of said 3D points representing a planar patch in said object of interest (206)

Extract a plurality of 3D features for each patch (208)

Assign at least one vector representing at least one 3D feature with a semantic label on the basis of at least one extracted 3D feature of the patch (210)

Fig. 2

EP 2 874 097 A2

**Description**

**Field of the invention**

The present invention relates to image processing, and more particularly to a process of automatic scene parsing.

**Background of the invention**

Automatic scene parsing is a traditional computer vision problem. Automatic urban scene parsing refers to the process of segmentation and classifying of objects of interest in an image into predefined semantic labels, such as "building", "tree" or "road". This typically involves a fixed number of object categories, each of which requires a training model for classifying image segments. While many techniques for two-dimensional (2D) object recognition have been proposed, the accuracy of these systems is to some extent unsatisfactory because 2D image cues are sensitive to varying imaging conditions such as lighting, shadow etc.

Many successful scene parsing techniques have used single 2D image appearance information, such as color, texture and shape. A drawback of single image feature extraction techniques is that they are sensitive to different image capturing conditions, such as lighting, camera viewpoint and scene structure. Recently, many efforts have been made to employ 3D scene features derived from single 2D images to achieve more accurate object recognition. Especially, when the input data is a video sequence, 3D cues can be extracted using Structure From Motion (SFM) techniques.

However, the SFM technique adopted in scene parsing systems is known to be fragile in outdoor environment because of the difficulty in obtaining correct correspondence in cases of sparse texture or occlusion in the images.

**Summary of the invention**

Now there has been invented an improved method and technical equipment implementing the method, by which the above problems are at least alleviated. Various aspects of the invention include a method, an apparatus and a computer program, which are characterized by what is stated in the independent claims. Various embodiments of the invention are disclosed in the dependent claims.

According to a first aspect, a method according to the invention is based on the idea of obtaining an image about at least one object of interest and a three-dimensional (3D) point cloud about said object of interest; aligning the 3D point cloud with the image; segmenting the image into a plurality of superpixels preserving a graph structure and spatial neighbourhood of pixel data of the image; associating the superpixels in the image with a subset of said 3D points, said subset of 3D points representing a planar patch in said object of interest; extracting a plurality of 3D features for each patch; and assigning at least one vector representing at least one 3D feature with a semantic label on the basis of at least one extracted 3D feature of the patch.

According to an embodiment, the 3D point cloud is derived using Light Detection And Ranging (LiDAR) method.

According to an embodiment, the method further comprises establishing correspondences between at least one subset of 3D points and at least one superpixel of the image.

According to an embodiment, the method further comprises segmenting the image into superpixels of substantially the same size.

According to an embodiment, extracting a plurality of 3D features for each patch involves extracting camera pose independent features and camera location dependent features.

According to an embodiment, the camera pose independent features include one or more of the following:

- height of the patch above ground;
- surface normal of the patch;
- patch planarity;
- density of 3D points in the patch;
- intensity of the patch defined as a function of reflectance of the light beams.

According to an embodiment, the camera location dependent features include one or more of the following:

- horizontal distance of the patch to camera;
- depth information of the patch to camera.

According to an embodiment, the method further comprises using a trained classifier algorithm for assigning said at least one vector representing the 3D feature with the semantic label.

According to an embodiment, the trained classifier algorithm is based on boosted decision trees, where a set of 3D features have been associated with manually labeled superpixels in training images during offline training.

According to a second aspect, there is provided an apparatus comprising at least one processor, memory including computer program code, the memory and the computer program code configured to, with the at least one processor, cause the apparatus to at least:

obtain an image about at least one object of interest and a three-dimensional (3D) point cloud about said object of interest;

align the 3D point cloud with the image;

segment the image into a plurality of superpixels preserving a graph structure and spatial neighbourhood of pixel data of the image;

associate the superpixels in the image with a subset of said 3D points, said subset of 3D points representing a planar patch in said object of interest;

extract a plurality of 3D features for each patch; and

assign at least one vector representing at least one 3D feature with a semantic label on the basis of at least one extracted 3D feature of the patch.

According to a third aspect, there is provided a computer readable storage medium stored with code thereon for use by an apparatus, which when executed by a processor, causes the apparatus to perform:

obtaining an image about at least one object of interest and a three-dimensional (3D) point cloud about said object of interest;

aligning the 3D point cloud with the image;

segmenting the image into a plurality of superpixels preserving a graph structure and spatial neighbourhood of pixel data of the image;

associating the superpixels in the image with a subset of said 3D points, said subset of 3D points representing a planar patch in said object of interest;

extracting a plurality of 3D features for each patch; and

assigning at least one vector representing at least one 3D feature with a semantic label on the basis of at least one extracted 3D feature of the patch.

These and other aspects of the invention and the embodiments related thereto will become apparent in view of the detailed disclosure of the embodiments further below.

## List of drawings

In the following, various embodiments of the invention will be described in more detail with reference to the appended drawings, in which

Fig. 1         show a computer graphics system suitable to be used in an automatic scene parsing process according to an embodiment;

Fig. 2         shows a flow chart of an automatic scene parsing process according to an embodiment of the invention;

Figs. 3a, 3b   illustrate an example of removing occluded points from the classification according to an embodiment of the invention;

Fig. 4         shows a table of identification accuracy in an experiment carried out according to an embodiment of the invention; and

Fig. 5         shows a table of the effect of an intensity feature used in an experiment carried out according to a further embodiment of the invention.

## Description of embodiments

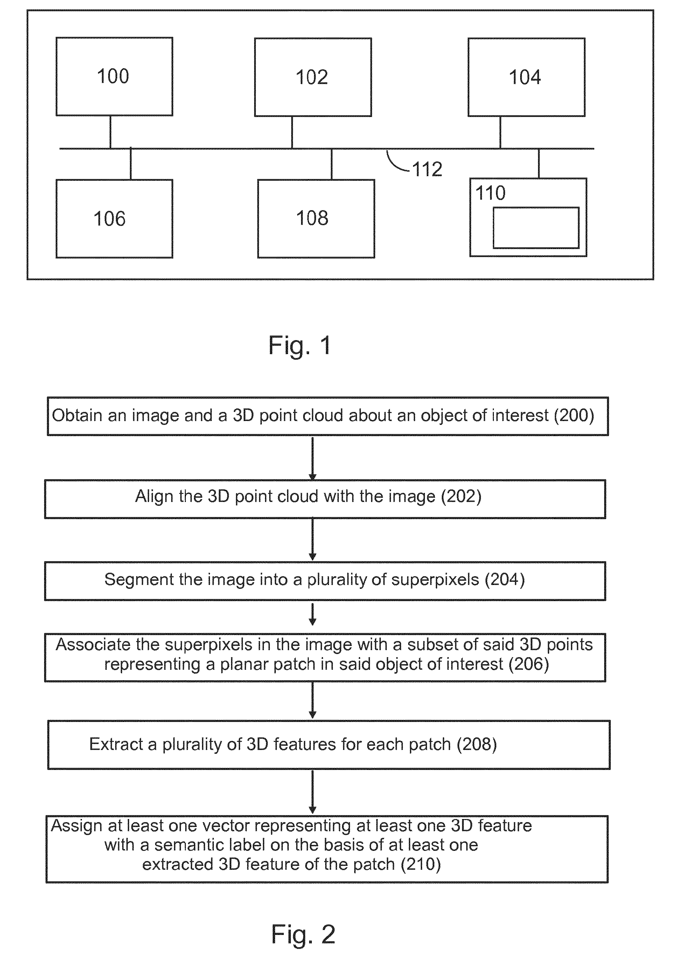

Figure 1 shows a computer graphics system suitable to be used in image processing, for example in automatic scene parsing process according to an embodiment. The generalized structure of the computer graphics system will be explained in accordance with the functional blocks of the system. For a skilled man, it will be obvious that several functionalities can be carried out with a single physical device, e.g. all calculation procedures can be performed in a single processor, if desired. A data processing system of an apparatus according to an example of Fig. 1 includes a main processing unit 100, a memory 102, a storage device 104, an input device 106, an output device 108, and a graphics subsystem 110, which all are connected to each other via a data bus 112.

The main processing unit 100 is a conventional processing unit arranged to process data within the data processing system. The memory 102, the storage device 104, the input device 106, and the output device 108 are conventional components as recognized by those skilled in the art. The memory 102 and storage device 104 store data within the data processing system 100. Computer program code resides in the memory 102 for implementing, for example, an automatic scene parsing process. The input device 106 inputs data into the system while the output device 108 receives data from the data processing system and forwards the data, for example to a display. The data bus 112 is a conventional data bus and while shown as a single line it may be a combination of a processor bus, a PCI bus, a graphical bus, and an ISA bus. Accordingly, a skilled man readily recognizes that the apparatus may be any conventional data processing device, such as a computer device, a personal computer, a server computer, a mobile phone, a smart phone or an Internet access device, for example Internet tablet computer. The input data of the automatic scene parsing process according to an embodiment and means for obtaining the input data are described further below.

It needs to be understood that different embodiments allow different parts to be carried out in different elements. For example, various processes of the scene parsing may be carried out in one or more processing devices; for example, entirely in one computer device, or in one server device or across multiple user devices The elements of the automatic scene parsing process may be implemented as a software component residing on one device or distributed across several devices, as mentioned above, for example so that the devices form a so-called cloud.

Automatic scene parsing is a traditional computer vision problem. Automatic urban scene parsing refers to the process of segmentation and classifying of objects of interest in an image into predefined semantic labels, such as "building", "tree" or "road". This typically involves a fixed number of object categories, each of which requires a training model for classifying image segments.

Many successful scene parsing techniques have used single 2D image appearance information, such as color, texture and shape. A drawback of single image feature extraction techniques is that they are sensitive to different image capturing conditions, such as lighting, camera viewpoint and scene structure. Recently, many efforts have been made to employ 3D scene features derived from single 2D images to achieve more accurate object recognition. Especially, when the input data is a video sequence, 3D cues can be extracted using Structure From Motion (SFM) techniques. Nevertheless, the SFM technique adopted in scene parsing systems is vulnerable in outdoor environment because of the difficulty in obtaining correct correspondence in cases of sparse texture or occlusion in the images.

Herein below, a novel automatic scene parsing approach is presented, which takes advantage of 3D geometrical features of the object of interest, for which accurate, high-resolution 3D information (e.g. longitude, latitude, altitude) as well as reflectance properties of urban environment in or around the object of interest may have been derived.

The method according to the embodiment is illustrated in Figure 2. Representing images with a limited number of pixel groups rather than individual pixels, thus decreasing significantly the number of computation nodes with the image, as well as the computational complexity, is generally called superpixel segmentation, turbopixel segmentation or over-segmentation. Superpixels may be created in various ways, for example by grouping similarly colored or otherwise homogenous pixels via merging.

In the method of Figure 2, an image about an object of interest and a three-dimensional (3D) point cloud about said object of interest is obtained (200) as an input for the process. The 3D point cloud is then aligned (202) with the two-dimensional image. Next, the image is segmented (204) into superpixels preserving a graph structure and spatial neighbourhood of pixel data of the image. A plurality of superpixels, preferably each superpixel in the image is associated (206) with a subset of said 3D points, said subset of 3D points representing a planar patch in said object of interest. A plurality of 3D features are extracted (208) for each patch, and at least one vector representing a 3D feature is assigned (210) with a semantic label, such as "sky", "road", "building", etc., based on at least one extracted 3D feature.

According to an embodiment, the 3D point cloud is derived using Light Detection And Ranging (LiDAR) method. In the LiDAR method, distances are measured by illuminating a target with a laser beam (e.g. ultraviolet, visible, or near-infrared light) and analyzing the reflected light. The resulting data is stored as point clouds. The LiDAR point clouds may be considered a set of vertices in a three-dimensional coordinate system, wherein a vertex may be represented by a planar patch defined by a 3D vector.

Mobile Terrestrial LiDAR (MTL) provides accurate, high-resolution 3D information (e.g. longitude, latitude, altitude) as well as reflectance properties of urban environment. For obtaining MTL 3D information about an environment, for example a vehicle-based mobile mapping system may be used. Such a mobile mapping system may comprise at least a panoramic camera capable of capturing 360° panoramic view around the moving vehicle and a plurality (e.g. 4-8) of hi-resolution cameras, each arranged to capture a segment of the 360° panoramic view around the moving vehicle. The mobile mapping system may comprise a LiDAR unit for scanning the surroundings with a laser beam, analysing the reflected light and storing the results as point clouds. The LiDAR unit may comprise, for example, a LiDAR sensor consisting of 64 lasers mounted on upper and lower blocks with 32 lasers in each side and the entire unit spins.

The LiDAR unit may generate and store, for example, 1.5 million points per second. The mobile mapping system may further comprise a satellite positioning unit, such as a GPS receiver, for determining the accurate location the moving vehicle and Inertial Measurement Unit (IMU) and Distance Measurement Instrument (DMI). The vehicle may be driven at the posted speed limit and the sensors are calibrated and synchronized to produce a coupled collection of high quality geo-referenced (i.e. latitude, longitude and altitude) data. The perspective camera image is generated by rendering the spherical panorama, for example with a view port of 2032×2032 pixels.

According to an embodiment, for aligning a 3D point cloud and a 2D image with known viewing camera pose, correspondences between collections of 3D points and groups of 2D image pixels are established. In particular, every collection of 3D points is assumed to be sampled from a visible planar 3D object, i.e. a patch, and corresponding 2D projections are confined within a homogenous region, i.e. superpixels (SPs) of the image. While the 3D-2D projection between patches and SPs is straightforward for known geometrical configurations, it still remains a challenging task to deal with outlier 3D points in a computationally efficient manner.

According to an embodiment, a 3D point is projected on a 2D image plane with a known viewing camera pose as follows: for a given viewing camera pose i.e. position and orientation, represented, respectively, by a 3×1 translation vector T and a 3×3 rotation matrix R, and a 3D point $M=[X,Y,Z]^t$, expressed in a Euclidean world coordinate system, then the 2D image projection $m_p= [u, v]^t$ of the point M is given by

$$\tilde{m}_p = K\,[R]\,[T]\,\tilde{M} = C\,\tilde{M} \qquad \text{(Eq. 1)}$$

where K is an upper triangular 3×3 matrix

$$K = \begin{vmatrix} f_x & 0 & x_0 \\ 0 & f_y & y_0 \\ 0 & 0 & 1 \end{vmatrix} \qquad \text{(Eq. 2)}$$

where $f_x$ and $f_y$ are the focal length in the x and y directions respectively, $x_0$ and $y_0$ are the offsets with respect to the image axes, and $\tilde{m}_p = [u,v,1]^t$ and $\tilde{M} = [X,Y,Z,1]^t$ are the homogeneous coordinates of $m_p$ and M.

3D Light Detection And Ranging (LiDAR) point clouds are often measured in a geographic coordinate system (i.e. longitude, latitude, altitude). Therefore, projecting a 3D LiDAR point on 2D image plane involves two more transformation steps, where the geographic coordinates are first transformed to Earth-Centered-Earth-Fixed coordinates (i.e. Geo-to-ECEF transformation) and then further to North-East-Down coordinates (i.e. ECEF-to-NED transformation). After these two transformations, a 3D point in the NED coordinate aligns to image plane by equation (2).

According to an embodiment, images are segmented into superpixels of roughly the same size. Herein, a geometric-flow based technique disclosed e.g. in "TurboPixels: Fast Superpixels Using Geometric Flows," by A. Levinshtein, A. Stere, K. N. Kutulakos, D. J. Fleet, S. J. Dickinson, and K. Siddiqi; IEEE Trans. on Pattern Analysis and Machine Intelligence, vol. 31, no. 12, p. 2290-2297, 2009. Sharp image edges are also well preserved by this method. For example, if the input images have a resolution of 2032×2032 pixels, the initial number of superpixels for each image may be set as 2500. In other words, while the number of pixels within a superpixel may vary, the average number of pixels within a superpixel would be approximately 1650 pixels/SP.

According to an embodiment, those 3D points that are projected within a specific SP may be identified by using the projection step in equation (2) and necessary transformation steps. Assuming there is only one dominant 3D patch that associates with the given SP, the outlier 3D points that are far from the patch should be removed.

According to an embodiment, the outlier removal method presented herein takes advantage of prior knowledge about urban scene environment and assumes that there are building facades along both sides of the street. While this assumption appears to be oversimplified, the experimental results have shown that the method performs quite well with various urban scenes. The simplified assumption enables to use a computationally lightweight method to remove outlier points for all SPs in one pass.

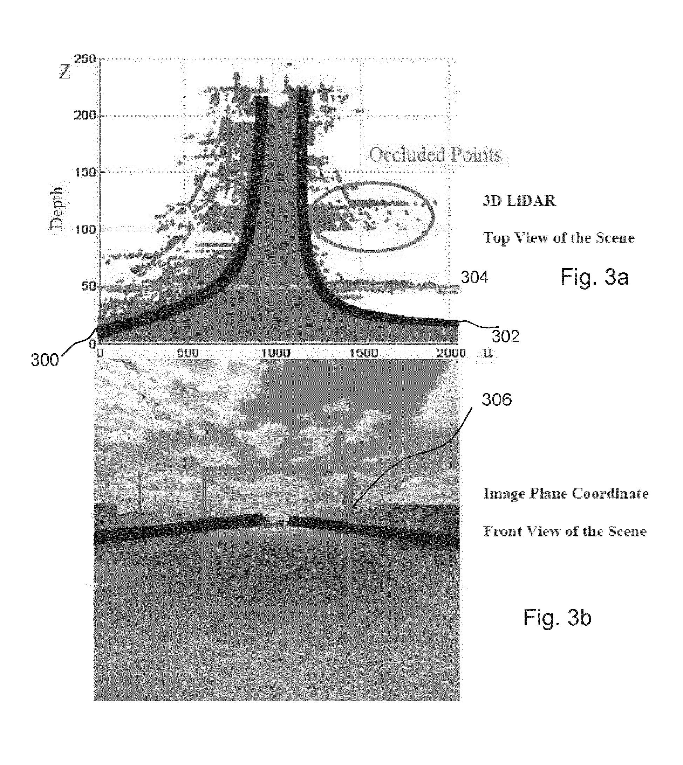

According to an embodiment, in the method two hyperbolic curves are fit to 3D points represented in a camera centered two-dimensional Z-u plane, as shown in Figure 3a. Figure 3a is a top view of the scene as 3D LiDAR points. 3D points that are far from camera center and behind these two hyperbolic curves 300, 302 are considered outliers and are thus removed. However, points with depth less than 50 meters (see the line 304) are kept because they may have significance when labelling roads or other near objects.

Figure 3b illustrates a front camera view of the scene, where the occluded points in the bystreet located in the square 306, which correspond to line 304 in Figure 3a as having with depth more than 50 meters, will be deleted.

According to an embodiment, the derivation of hyperbolic curves in this Z-u plane is due to the normalization of homogeneous coordinates:

$$v = (f_y*Y)/Z + y_0, \text{ and } u = (f_x*X)/Z + x_0 \qquad \text{(Eq. 3)}$$

where the street width X is assumed constant, u is inversely related to the depth Z, and the collection of aligned points in the 3D world lies between two hyperbolic lines, such as the hyperbolic curves 300, 302 in Figure 3a.

According to an embodiment, extracting a plurality of 3D features for each patch involves extracting camera pose independent features and camera location dependent features.

According to an embodiment, the camera pose independent features include one or more of the following:

Height above ground: Given a collection of 3D points with known geographic coordinates, the median height of all points may be considered to be the height feature of the patch. The height information is independent of the camera pose and may be calculated by measuring the distance between points and the road ground. In contrast to 3D point clouds reconstructed with SFM technique, the advantage of LiDAR point cloud is that the exact measure of points' height is known and it is not necessary to use e.g. the computationally heavy RANSAC (RANdom SAmple Consensus) method to estimate the ground plane.

Surface normal: Surface normal may be extraced for each patch. Then an accurate method to compute the surface normal may be applied by fitting a plane to the 3D points in each patch. For example, the RANSAC algorithm may be used to remove outliers which may correspond to very "close" objects such as a pedestrian or a vehicle.

Planarity: Patch planarity may be defined as the average square distance of all 3D points from the best fitted plane computed by the RANSAC algorithm. This feature may be useful for distinguishing planar objects, such as buildings, from non-planar objects, such as trees.

Density: Some objects, such as road and sky, have lower density of point cloud as compared to others, such as trees and vegetation. Therefore, the number of 3D points in a patch may be used as a strong cue to distinguish different classes.

Intensity: LiDAR systems provide not only positioning information but also reflectance property, referred to as intensity, of laser scanned objects. The intensity feature may be used herein, in combination with other features, to classify 3D points. More specifically, the median intensity of points in each patch may be used to train the classifier.

According to an embodiment, the camera location dependent features include one or more of the following:

Horizontal distance to camera: The horizontal distance of the each patch to the camera is measured as a geographical feature.

Depth to camera: Depth information helps to distinguish objects, such that the 3D spatial location of each patch may be estimated.

According to an embodiment, for assigning at least one vector representing a 3D feature with a semantic label, a trained classifier may be used. According to an embodiment, the training of the classifier may be offline training, which is based on boosted decision trees, where a set of 3D features are associated with manually labeled SPs in training images.

The boosted decision trees have demonstrated superior classification accuracy and robustness in many multi-class classification tasks. An example of boosted decision tress is disclosed e.g. in "Logistic regression, adaboost and bregman distances," by M. Collins, R. Schapire, and Y. Singer; Machine Learning, vol. 48, no. 1-3, 2002. Acting as weaker learners, decision trees automatically select features that are relevant to the given classification problem. Given different weights of training samples, multiple trees are trained to minimize average classification errors. Subsequently, boosting is done by logistic regression version of Adaboost to achieve higher accuracy with multiple trees combined together.

A skilled man appreciates that any of the embodiments described above may be implemented as a combination with one or more of the other embodiments, unless there is explicitly or implicitly stated that certain embodiments are only alternatives to each other.

The automatic scene parsing method and its embodiments as described above were tested in comprehensive experiments in three cities in different weather conditions and city landscapes. In the experiments, 20 decision trees were used, each of which had 10 leaf nodes, thus enabling to label 10 semantic object classes: building, tree, sky, car, sign-symbol, pedestrian, road, fence, sidewalk and water.

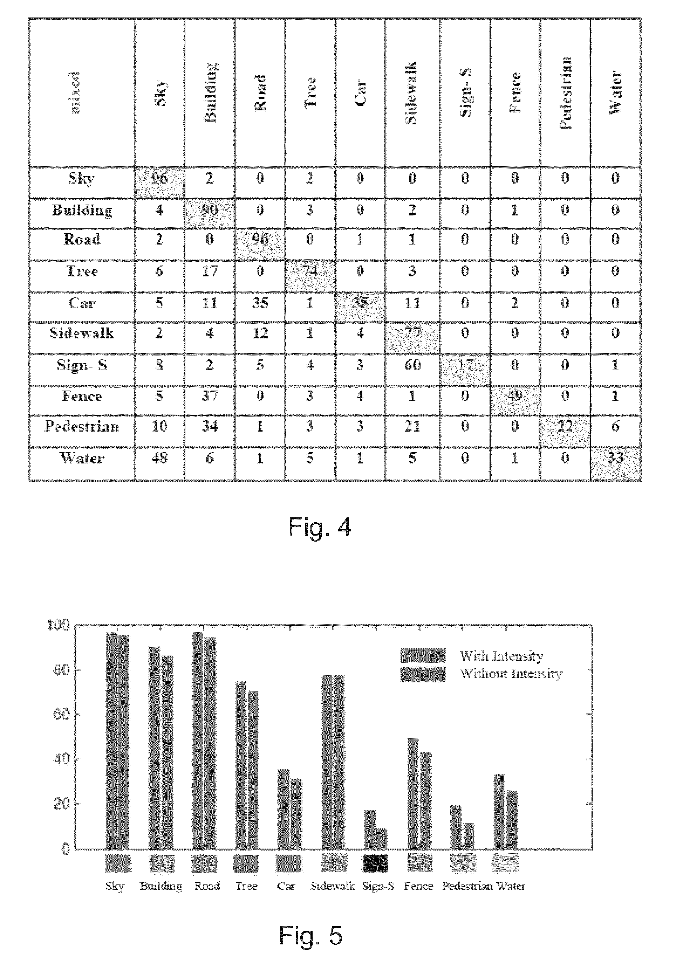

The table in Figure 4 shows a confusion matrix resulting from the experiments, illustrating the identification accuracy in those 10 semantic object classes. The results show that for larger objects, such as sky, building, road, tree and sidewalk, the accuracy of correctly classifies superpixels was very high, 77 - 96 %, depending on the object.

Applying SP based segmentation to relatively small objects, such as pedestrian and sign-symbol, often leads to insufficient number of training samples, and hence, low classification accuracies of about 10%. However, when using the LiDAR point reflectance property, i.e. intensity feature, for object classification, the accuracy may be significantly improved, even doubled to about 20%.

This is illustrated in the table of Figure 5, where the left-hand bar for each semantic object class represents the accuracy, when the intensity feature is utilized in training samples, and the right-hand bar represents the accuracy without the intensity feature. In each semantic object class, the accuracy is improved when the intensity feature is utilized in training samples, but the most significant improvement is achieved for small objects, such as pedestrian and sign-symbol.

As confirmed by the experiments, the various embodiments may provide advantages over state of the art. The overall usage of 3D LiDAR point clouds for street view scene parsing improves parsing accuracies under challenging conditions such as varying lighting and urban structures. The improvement is achieved by circumventing error-prone 2D feature extraction and matching steps. Moreover, the embodiments for registering 3D point cloud to 2D image plane enables to remove occluded points from behind the buildings in an efficient manner. In addition, the novel LiDAR point reflectance property, i.e. intensity feature for semantic scene parsing, enables to combine both LiDAR intensity feature and geometric features such that more robust classification results may be obtained. Consequently, classifiers trained in one type of city and weather condition is now possible to be applied to a different scene structure with high accuracy.

The various embodiments of the invention can be implemented with the help of computer program code that resides in a memory and causes the relevant apparatuses to carry out the invention. For example, an apparatus may comprise circuitry and electronics for handling, receiving and transmitting data, computer program code in a memory, and a processor that, when running the computer program code, causes the terminal device to carry out the features of an embodiment.

It is obvious that the present invention is not limited solely to the above-presented embodiments, but it can be modified within the scope of the appended claims.

**Claims**

1. A method comprising:

    obtaining an image about at least one object of interest and a three-dimensional (3D) point cloud about said object of interest;
    aligning the 3D point cloud with the image;
    segmenting the image into a plurality of superpixels preserving a graph structure and spatial neighbourhood of pixel data of the image;
    associating the superpixels in the image with a subset of said 3D points, said subset of 3D points representing a planar patch in said object of interest;
    extracting a plurality of 3D features for each patch; and
    assigning at least one vector representing at least one 3D feature with a semantic label on the basis of at least one extracted 3D feature of the patch.

2. The method according to claim 1, wherein the 3D point cloud is derived using Light Detection And Ranging (LiDAR) method.

3. The method according to claim 1 or 2, the method further comprising:

    establishing correspondences between at least one subset of 3D points and at least one superpixel of the image.

4. The method according to any preceding claim, the method further comprising:

    segmenting the image into superpixels of substantially the same size.

5. The method according to any preceding claim, wherein extracting a plurality of 3D features for each patch involves extracting camera pose independent features and camera location dependent features.

6. The method according to claim 5, wherein the camera pose independent features include one or more of the following:

- height of the patch above ground;
- surface normal of the patch;
- patch planarity;
- density of 3D points in the patch;
- intensity of the patch defined as a function of reflectance of the light beams.

7. The method according to claim 5, wherein the camera location dependent features include one or more of the following:

- horizontal distance of the patch to camera;
- depth information of the patch to camera.

8. The method according to any preceding claim, the method further comprising:

using a trained classifier algorithm for assigning said at least one vector representing the 3D feature with the semantic label.

9. The method according to claim 8, wherein the trained classifier algorithm is based on boosted decision trees, where a set of 3D features have been associated with manually labeled superpixels in training images during offline training.

10. An apparatus comprising at least one processor, memory including computer program code, the memory and the computer program code configured to, with the at least one processor, cause the apparatus to at least:

obtain an image about at least one object of interest and a three-dimensional (3D) point cloud about said object of interest;
align the 3D point cloud with the image;
segment the image into a plurality of superpixels preserving a graph structure and spatial neighbourhood of pixel data of the image;
associate the superpixels in the image with a subset of said 3D points, said subset of 3D points representing a planar patch in said object of interest;
extract a plurality of 3D features for each patch; and
assign at least one vector representing at least one 3D feature with a semantic label on the basis of at least one extracted 3D feature of the patch.

11. An apparatus according to claim 10, wherein the apparatus is further configured to perform the method as claimed in any of the claims 2 to 9.

12. A computer program product comprising program instructions which when executed by an apparatus cause the apparatus to perform the method as claimed in any of the claims 1 to 9.

Fig. 1

| Obtain an image and a 3D point cloud about an object of interest (200) |
|---|

| Align the 3D point cloud with the image (202) |
|---|

| Segment the image into a plurality of superpixels (204) |
|---|

| Associate the superpixels in the image with a subset of said 3D points representing a planar patch in said object of interest (206) |
|---|

| Extract a plurality of 3D features for each patch (208) |
|---|

| Assign at least one vector representing at least one 3D feature with a semantic label on the basis of at least one extracted 3D feature of the patch (210) |
|---|

Fig. 2

3D LiDAR

Top View of the Scene

Fig. 3a

Image Plane Coordinate

Front View of the Scene

Fig. 3b

| mixed | Sky | Building | Road | Tree | Car | Sidewalk | Sign-S | Fence | Pedestrian | Water |
|---|---|---|---|---|---|---|---|---|---|---|
| Sky | 96 | 2 | 0 | 2 | 0 | 0 | 0 | 0 | 0 | 0 |
| Building | 4 | 90 | 0 | 3 | 0 | 2 | 0 | 1 | 0 | 0 |
| Road | 2 | 0 | 96 | 0 | 1 | 1 | 0 | 0 | 0 | 0 |
| Tree | 6 | 17 | 0 | 74 | 0 | 3 | 0 | 0 | 0 | 0 |
| Car | 5 | 11 | 35 | 1 | 35 | 11 | 0 | 2 | 0 | 0 |
| Sidewalk | 2 | 4 | 12 | 1 | 4 | 77 | 0 | 0 | 0 | 0 |
| Sign- S | 8 | 2 | 5 | 4 | 3 | 60 | 17 | 0 | 0 | 1 |
| Fence | 5 | 37 | 0 | 3 | 4 | 1 | 0 | 49 | 0 | 1 |
| Pedestrian | 10 | 34 | 1 | 3 | 3 | 21 | 0 | 0 | 22 | 6 |
| Water | 48 | 6 | 1 | 5 | 1 | 5 | 0 | 1 | 0 | 33 |

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. LEVINSHTEIN ; A. STERE ; K. N. KUTULAKOS ; D. J. FLEET ; S. J. DICKINSON ; K. SIDDIQI.** TurboPixels: Fast Superpixels Using Geometric Flows. *IEEE Trans. on Pattern Analysis and Machine Intelligence,* 2009, vol. 31 (12), 2290-2297

- **M. COLLINS ; R. SCHAPIRE ; Y. SINGER.** Logistic regression, adaboost and bregman distances. *Machine Learning,* 2002, vol. 48 (1-3